# EUROPÄISCHE PATENTANMELDUNG

(11) **EP 1 041 316 A2**
(43) Veröffentlichungstag der Anmeldung: **04.10.2000**
(21) Anmeldenummer: 00106490.6
(22) Anmeldetag: 25.03.2000
(51) Int. Cl.: F16H 61/46

(54) **Hydraulischer Antrieb**

(30) Priorität: 31.03.1999 DE 19914560
(71) Anmelder: ZF FRIEDRICHSHAFEN Aktiengesellschaft, 88038 Friedrichshafen (DE)
(72) Erfinder: Mann, Egon, 88045 Friedrichshafen (DE)

(57) **Zusammenfassung**

Ein hydraulischer Motor (15) ist in seinem Hubvolumen so verstellbar, daß in Verbindung mit einer verstellbaren hydraulischen Pumpe (14) zwei Fahrbereiche (7, 8) entstehen, welche sich teilweise nicht überdecken. Um bei einer automatischen Verstellung des Hubvolumens des hydraulischen Motors (15) eine Pendelschaltung zu verhindern, wird nach erfolgter Verstellung des hydraulischen Motors (15) eine weitere Verstellung erst nach Ablauf einer definierten Zeitspanne ausgelöst.

## Beschreibung

Hydraulische Antriebe werden häufig für den Antrieb von mobilen Fahrzeugen eingesetzt. Dabei fördert vorzugsweise eine in ihrem Hubvolumen verstellbare, hydrostatische Pumpe Druckflüssigkeit zu einem in seinem Hubvolumen verstellbaren Motor welcher häufig über ein Getriebe Antriebsräder antreibt. Um kleinere hydrostatische Pumpen verwenden zu können, jedoch im niedrigen Geschwindigkeitsbereich hohe Zugkräfte zu erreichen und dennoch eine hohe Endgeschwindigkeit zu erreichen, ist es notwendig, den hydraulischen Motor in seinem Hubvolumen zu verstellen. Häufig werden hydraulische Motoren mit zwei festen Hubvolumen verwendet.

Hydraulische Antriebe vorzugsweise in Raupenbaggern sind dergestalt ausgeführt, daß in ihrem Hubvolumen verstellbare hydrostatische Pumpen Druckflüssigkeit zu in ihrem Hubvolumen verstellbaren Motoren fördern, welche über Untersetzungsgetriebe ein Turasrad und somit die Raupe des Fahrzeugs antreiben. Die hydrostatischen Motoren weisen zwei feste Hubvolumen auf, welche automatisch schaltbar sind. Die automatische Schaltung vom kleinen Hubvolumen des hydostatischen Motors auf das große Hubvolumen erfolgt dann, wenn ein bestimmter Druck im Zulauf von der hydrostatischen Pumpe zum hydostatischen Motor überschritten wird. Eine automatische Schaltung vom großen Hubvolumen des hydrostatischen Motors auf das kleine Hubvolumen erfolgt dann, wenn im Zulauf von der hydrostatischen Pumpe zum hydrostatischen Motor ein bestimmter Druck unterschritten wird. Bei gleichbleibendem Antriebsdrehmoment ist das Produkt aus dem Hubvolumen des hydrostatischen Motors und dem Druck im Zulauf von der hydrostatischen Pumpe zum hydrostatischen Motor konstant. Wird das Hubvolumen des hydrostatischen Motors um den Faktor 2 verkleinert, so erhöht sich der Druck im Zulauf von der hydrostatischen Pumpe zum hydrostatischen Motor um den Faktor 2 um das gleiche Antriebsdrehmoment zu erzeugen. Aus diesem Grund ist es bei diesem System notwendig, daß bei einer Schaltung des hydrostatischen Motors das Hubvolumen des hydrostatischen Motors um nur so viel verringert wird, daß der Druck der nach der Schaltung entsteht, nicht eine sofortige Rückschaltung zur Folge hat. Würde bei einer Schaltung das Hubvolumen mehr verringert, so entsteht nach der Schaltung ein so hoher Druck im Zulauf von der hydrostatischen Pumpe zum hydrostatischen Motor, daß das Druckniveau bei welchem der hydrostatische Motor automatisch wieder auf das große Hubvolumen schaltet, überschritten würde. Dies hätte eine permanente Pendelschaltung zur Folge. Um jedoch bei gleichbleibender Pumpenfördermenge einerseits höhere Zugkräfte im niedrigen Geschindigkeitsbereich zu erreichen und andererseits eine hohe Endgeschwindigkeit zu erreichen ohne die Fördermenge der Pumpe zu vergrößern, ist es notwendig, das Hubvolumen des hydrostatischen Motors so weit zu verringern, daß das Druckniveau bei welchem eine automatische Schaltung in das große Hubvolumen erfolgen würde, überschritten wird.

Der vorliegenden Erfindung liegt daher die Aufgabe zugrunde, einen hydraulischen Antrieb zu schaffen, bei welchem bei einem großen Hubvolumenunterschied des hydraulischen Motors Pendelschaltungen verhindert werden.

Die Aufgabe wird mit einem auch die kennzeichnenden Merkmale des Hauptanspruchs aufweisenden gattungsgemäßen hydraulischen Antrieb gelöst.

Erfindungsgemäß besteht der hydraulische Antrieb aus einer hydraulischen Pumpe, welche Druckflüssigkeit zu einem in seinem Hubvolumen verstellbaren hydraulischen Motor fördert. Die Fördermenge der hydraulischen Pumpe und die Hubvolumen des hydraulischen Motors können dergestalt ausgelegt sein, daß bei einer Schaltung vom großen Hubvolumen des hydraulischen Motors zum kleinen Hubvolumen des hydraulischen Motors keine Überdeckung vorhanden ist, das heißt, nach Schaltung des großen Hubvolumens auf das kleine Hubvolumen des hydraulischen Motors, kann der maximal zulässige Druck im Zulauf von der hydraulischen Pumpe zum hydraulischen Motor überschritten werden. Um eine sofortige Rückschaltung zu verhindern, wird jegliche Schaltung innerhalb einer zuvor bestimmten Zeitspanne verhindert, bis nach der Schaltung entweder das Druckniveau infolge sinkendem erforderlichen Antriebsdrehmoment unter einen definierten Wert sinkt, und somit das Rückschaltdruckniveau unterschreitet, oder das erforderliche Antriebsdrehmoment gleich bleibt oder weiter steigt und somit eine Rückschaltung erforderlich macht. Die Zeitspanne ist vorzugsweise so ausgelegt, daß das nach dieser Zeitspanne zu erwartende Druckniveau unterhalb dem sofortigen Rückschaltdruckniveau liegt. Vorzugsweise wird diese Schaltung mit Hilfe eines elektronischen Steuergerätes berechnet so daß die Zeitspanne bei einer zu häufigen sofortigen Rückschaltungen sich automatisch verlängert bzw. im entgegengesetzten Fall sich automatisch verkürzt. Die Zeitspanne kann aber auch einen zuvor festgelegten festen Wert enthalten. Es ist jedoch auch eine rein hydraulische Lösung mit einer zuvor fest definierten Zeitspanne, welche mit Hilfe eines hydraulischen Speichers und einer mit Druckflüssigkeit durchflossenen Blende realisiert werden kann, möglich. Diese Lösung ist jedoch abhängig von der Temperatur, da sich die Viskosität verändert. Vorzugsweise wird ein außen abgestützter Radialkolbenlangsamläufermotor verwendet, welcher sich dadurch auszeichnet, daß bei einem Steuersignal zum Verstellen des Hubvolumens des Motors zum Verstellen des Hubvolumens sich das Hubvolumen sofort vom minimalen Hubvolumen auf das maximale Hubvolumen oder umgekehrt verändert. Bei einem Axialkolbenmotor ist dies nicht möglich, da die Schiefscheibe zur Verstellung Zeit benötigt. Die erfindungsgemäße Steuerung ist jedoch auch bei Axialkolbenmotoren und Hubvolumenauslegungen, bei welchen eine Überdeckung vorhanden ist, möglich. Da bei einer Schaltung vom großen Hubvolumen des hydraulischen Motors zum kleinen Hubvolumen des hydraulischen Motors in den meisten Fällen infolge einer Bergabfahrt der Fahrwiderstand sinkt, kann durch die zeitweise Unterbrechung einer anstehenden Schaltung wirksam Pendelschaltungen verhindert werden, da in den meisten Fällen das geforderte Antriebsdrehmoment nicht sofort wieder ansteigt. Bei einer Schaltung vom kleinen Hubvolumen des hydraulischen Motors zum großen Hubvolumen des hydraulischen Motors kann durch eine zeitweise Unterbrechung der anstehenden Schaltungen wirksam Pendelschaltungen verhindert werden, da das geforderte Abtriebsdrehmoment in den meisten Fällen nicht sofort wieder abfällt.

Weitere, eventuell vorteilhafte Ausgestaltungen sind in den Figurenbeschreibungen aufgeführt. Es zeigen:

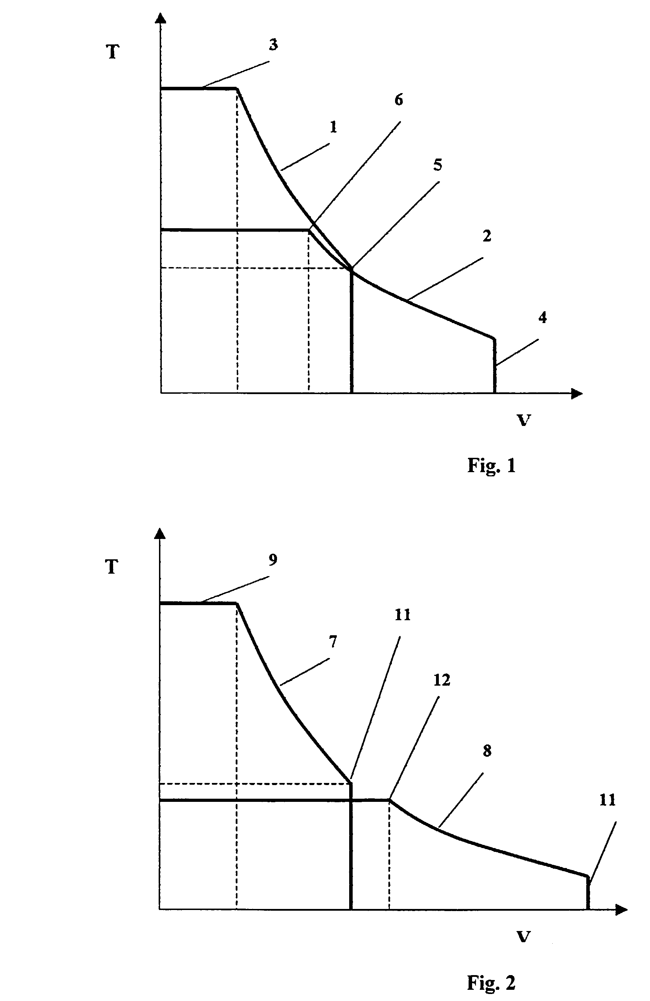

- Fig. 1: einen Drehmomentgeschwindigkeitsbereich, bei welchem sich die Fahrbereiche überdecken;
- Fig. 2: einen Drehmomentgeschwindigkeitsbereich, bei welchem sich die Fahrbereiche nicht überdecken und

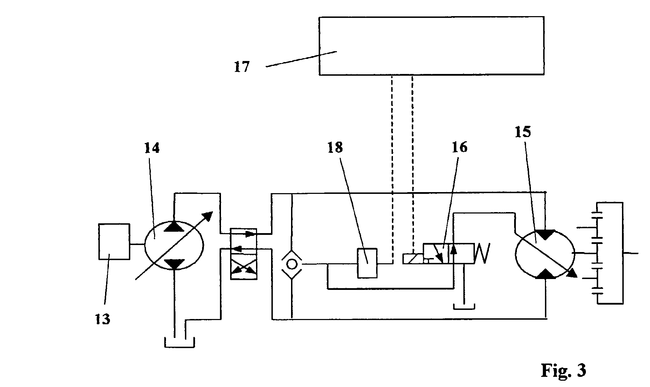

- Fig. 3: ein Schema eines hydraulischen Antriebs mit automatischer Schalteinrichtung.

Fig. 1:
   Der Fahrbereich 1 wird mit einem hydraulischen Motor mit maximalem Hubvolumen durch verändern der Fördermenge der Pumpe erreicht. Ein Fahrbereich 2 wird mit einem hydraulischen Motor mit minimalem Hubvolumen durch Verstellung der Fördermenge der hydraulischen Pumpe erreicht. Das maximale Drehmoment (T) 3 wird bei einem maximal zulässigen Druck und maximalem Hubvolumen des hydraulischen Motors erreicht. Die maximale Geschwindigkeit(V) 4 wird bei einem minimalen Hubvolumen des hydraulischen Motors und einer maximalen Fördermenge der hydraulischen Pumpe erreicht. Die Differenz zwischen minimalen und maximalem Hubvolumen des hydraulischen Motors ist nur so groß, daß sich die beiden Fahrbereiche überschneiden. Wird in einem Schaltungspunkt 5 von einem maximalen Hubvolumen auf ein minimales Hubvolumen umgeschaltet, so wird der maximal zulässige Druck nicht erreicht, da die Differenz zwischen minimalen und maximalen Hubvolumen des hydraulischen Motors zu gering ist. Durch die Überdeckung der beiden Fahrbereiche ist der Druck welcher nach dieser Schaltung entsteht auch unterhalb dem Druck der eine sofortige Rückschaltung bewirken würde. Wird bei einem Schaltungspunkt 6 vom minimalen Hubvolumen des hydraulischen Motors auf ein maximales Hubvolumen des hydraulischen Motors geschaltet, so sinkt der nach der Schaltung entstehende Druck durch die geringe Differenz des maximalen zum minimalen Hubvolumen des hydraulischen Motors nur so weit ab, daß das Druckniveau welches eine sofortige Hochschaltung bewirken würde, nicht erreicht wird. Bei dieser Auslegung entstehen keine Pendelschaltungen und ist eine erfindungsgemäße Zeitverzögerung einer Folgeschaltung nicht notwendig.
Fig. 2:
   Ein Fahrbereich 7 bei welchem das Hubvolumen des hydraulischen Motors auf ein maximales Hubvolumen eingestellt ist, entsteht dadurch, daß die Fördermenge der hydraulischen Pumpe verändert wird. Ein Fahrbereich 8 bei welchem das Hubvolumen des hydraulischen Motors auf ein minimales Hubvolumen eingestellt ist, entsteht dadurch, daß die Fördermenge der hydraulischen Pumpe verändert wird. Ein maximales Drehmoment (T) 9 wird erreicht, in dem ein maximaler Druck auf ein maximales Hubvolumen des hydraulischen Motors wirkt. Eine maximale Geschwindigkeit (V) 10 wird erreicht, in dem die maximale Fördermenge der Pumpe auf ein minimales Hubvolumen des hydraulischen Motors wirkt. Wird bei einem Schaltungspunkt 11 vom maximalen Hubvolumen des hydraulischen Motors auf ein minimales Hubvolumen des hydraulischen Motors geschaltet, so wird in dem die Differenz zwischen minimalem und maximalem Hubvolumen des hydraulischen Motors sehr groß ist, ein maximal zulässiger Druck erreicht, bzw. überschritten. Dieser, sich nach der Schaltung einstellende Druck, liegt über dem Druckniveau welches eine sofortige Rückschaltung auslösen würde. Wird bei einem Schaltungspunkt 12 von dem minimalen Hubvolumen des hydraulischen Motors auf ein maximales Hubvolumen des hydraulischen Motors geschaltet, so sinkt der Druck nach der Schaltung so weit ab, daß das Druckniveau, welches eine sofortige Hochschaltung auslösen würde, unterschritten wird. Um bei diesen Schaltungen eine Pendelschaltung, das heißt ein dauerndes hoch- und rückschalten zu verhindern, wird nach jeder automatisch ausgeführten Schaltung eine Zeitspanne vorgegeben, bei welcher keine weitere Schaltung stattfindet. Fährt ein Fahrzeug im Fahrbereich 7 bei maximalem Hubvolumen des hydraulischen Motors und der Fahrwiderstand verringert sich, in dem z. B. das Gelände abschüssig wird, so sinkt der Druck auf ein bestimmtes Niveau welches wenn der Fahrwiderstand ein bestimmtes Niveau unterschreitet eine automatische Schaltung auslöst. Bei der automatischen Schaltung wird vom maximalen Schluckvolumen des Motors auf das minimale Schluckvolumen des Motors umgeschaltet und der Druck erhöht sich dadurch. Eine weitere Schaltung wird durch eine vorgegebene Zeitspanne verhindert, so daß der Druck infolge eines weiter sinkenden Fahrwiderstandes weiter absinken kann ohne daß eine Schaltung eingeleitet wird.
   Nach Ablauf der vorgegebenen Zeitspanne ist die Schaltungsbereitschaft wieder vorhanden, da jedoch der nun anstehende Druck unterhalb einem bestimmten Niveau ist, bei welchem eine Schaltung ausgelöst werden würde, bleibt der hydraulische Motor in dem geschalteten Hubvolumen. Steigt der Fahrwiderstand nun erneut an, wird ein bestimmtes Druckniveau überschritten und eine Schaltung in das maximale Hubvolumen erfolgt.
   Fährt das Fahrzeug im Fahrbereich 8 und der Fahrwiderstand steigt, so steigt auch der Druck an. Überschreitet dieser Druck ein bestimmtes Niveau, so wird eine Schaltung vom minimalen Hubvolumen des Motors in das maximale Hubvolumen durchgeführt. Durch die Schaltung vom minimalen Hubvolumen auf das maximale Hubvolumen sinkt der Druck nach der Schaltung soweit ab, daß erneut eine Schaltung eingeleitet werden würde. In dem eine definierte Zeitspanne diese Schaltung verhindert, steigt der Druck infolge steigendem Fahrwiderstandes weiter an, so daß nach Ablauf der Zeitspanne ein Druckniveau erreicht ist, bei welchem der Motor in dem geschalteten Hubvolumen verbleibt. Je nach Gelände und Ausführung einer elektronischen Steuerung besteht die Möglichkeit, die Zeitspanne in welcher keine Schaltung erfolgen darf den gegebenen Einsatzbedingungen anzupassen, in dem laufend die Veränderungen des Druckniveaus in Zulauf von der hydraulischen Pumpe zum hydraulischen Motors gemessen und ausgewertet werden. Weitere Parameter, welche den Schaltungspunkt und die Zeitspanne beeinflussen, können auch Daten des Antriebsmotors der Pumpe, sowie die Fördermenge der Pumpe sein.
Fig. 3:
   Ein Antriebsmotor 13 treibt eine hydraulische Pumpe 14 an, welche Druckflüssigkeit zu einem hydraulischen Motor 15 fördert, wobei die hydraulische Pumpe 14 und der hydraulische Motor 15 in ihrem Hubvolumen verstellbar sind. Der hydraulische Motor 15 besitzt ein minimales Hubvolumen und ein maximales Hubvolumen, welches über ein Ventil 16 umgeschaltet wird. Das Ventil 16 wird von einer elektronischen Steuerung 17 angesteuert, welche über einen Drucksensor 18 fortlaufend den Druck der Druckflüssigkeit von der hydraulischen Pumpe 14 zum hydraulischen Motor 15 mißt. Die Steuerung 17 kann weitere Signale von Sensoren auswerten welche z. B. die Drehzahl des Antriebsmotors 13, sowie dessen Drückung die Fördermenge der hydraulischen Pumpe 14 oder weitere Signale der Antriebseinheit messen. Abhängig von diesen Parametern kann die elektronische Steuerung eine Schaltung auslösen und die Länge der an dieser Schaltung angrenzenden Zeitspanne, bei welcher keine weitere Schaltung stattfindet bestimmen. Der Steuerdruck, welcher zur Verstellung des hydraulischen Antriebsmotors 13 benötigt wird, kann entweder von dem Druck der Druckflüssigkeit von der hydraulischen Pumpe 14 zum hydraulischen Motor 15 oder über ein Druckreduzierventil abgenommen werden.

### Bezugszeichen

- 1: Fahrbereich
- 2: Fahrbereich
- 3: maximales Drehmoment
- 4: maximale Geschwindigkeit
- 5: Schaltungspunkt
- 6: Schaltungspunkt
- 7: Fahrbereich
- 8: Fahrbereich
- 9: maximales Drehmoment
- 10: maximale Geschwindigkeit
- 11: Schaltungspunkt
- 12: Schaltungspunkt
- 13: Antriebsmotor
- 14: Pumpe
- 15: Motor
- 16: Ventil
- 17: Steuerung
- 18: Drucksensor

## Patentansprüche

1. Hydraulischer Antrieb mit einer hydraulischen Pumpe (14) welche Druckflüssigkeit zu einem in seinem Hubvolumen verstellbaren hydraulischen Motor (15) fördert und einer Schalteinrichtung (16) welche immer dann den hydraulischen Motor (15) auf ein kleineres Hubvolumen verstellt, wenn die Druckflüssigkeit welche von der hydraulischen Pumpe (14) zum hydraulischen Motor (15) gefördert wird ein bestimmtes Druckniveau unterschritten hat und immer dann den hydraulischen Motor (15) auf ein größeres Hubvolumen verstellt, wenn die Druckflüssigkeit welche von der hydraulischen Pumpe (14) zum hydraulischen Motor (15) gefördert wird ein bestimmtes Druckniveau überschritten hat, dadurch **gekennzeichnet,** daß nach einer Verstellung des Hubvolumens des hydraulischen Motors (15) eine weitere Verstellung erst nach Ablauf einer Zeitspanne erfolgen kann.

2. Hydraulischer Antrieb nach Anspruch 1, dadurch **gekennzeichnet,** daß die Schalteinrichtung (16) von einer elektronischen Steuerung (17) angesteuert wird.

3. Hydraulischer Antrieb nach Anspruch 1, dadurch **gekennzeichnet,** daß der hydraulische Motor (15) ein Langsamläufermotor mit abschaltbarem Hubvolumen ist.

4. Hydraulischer Antrieb nach Anspruch 1, dadurch **gekennzeichnet,** daß Verstellungen des hydraulischen Motors (15) in Abhängigkeit von einem hydraulischen Druck und weiteren Parametern wie einer Drückung des Antriebsmotors und/oder einem Fördervolumen einer hydraulischen Pumpe abhängig sind.

5. Hydraulischer Antrieb nach Anspruch 1, dadurch **gekennzeichnet,** daß die Länge der definierten Zeitspanne in Abhängigkeit vom Verlauf des hydraulischen Drucks des hydraulischen Motors (15) und weiteren Parametern wie einer Drückung des Antriebsmotors abhängig ist.

6. Hydraulischer Antrieb nach Anspruch 1, dadurch **gekennzeichnet**, daß der hydraulische Antrieb so ausgelegt ist, daß bei einer Verstellung von einem kleinen auf ein großes Hubvolumen des hydraulischen Motors (15) und einer Verstellung von einem großen auf ein kleines Hubvolumen des hydraulischen Motors (15) ein Bereich ohne Überdeckung entsteht.
